# DEMANDE DE BREVET EUROPEEN

(11) **EP 4 725 798 A1**
(43) Date de publication de la demande: **15.04.2026**
(21) Numéro de dépôt: 25206091.8
(22) Date de dépôt: 01.10.2025
(51) Int. Cl.: B62D 3/12

(54) **FIXATION DE CRÉMAILLÈRE DE VÉHICULE AUTOMOBILE PAR RAILS**

(30) Priorité: 08.10.2024 FR 2410845
(71) Demandeur: Stellantis Auto SAS, 78300 Poissy (FR)
(72) Inventeur: AFRIAD, Idriss, 20270 Casablanca (MA); SERTANY, Soukaina, 20270 Casablanca (MA)
(74) Mandataire: BCIP

(57) **Abrégé**

L'invention a pour objet un ensemble pour véhicule automobile de type micro-mobilité. L'ensemble comprend une structure avec une traverse (36) ; un module de crémaillère (28) pour système de direction de véhicule automobile, le module de crémaillère (28) comprenant un corps de guidage (38) avec un passage transversal, une tige dentée mobile transversalement au travers du passage transversal ; une interface d'assemblage (42) de la traverse (36) et du corps de guidage ; des moyens de fixation (60) du corps de guidage à la traverse. L'interface d'assemblage (42) comprend une gorge femelle (48) ; un rail mâle (58) s'étendant transversalement dans la gorge femelle (48) afin de maintenir le corps de guidage (38) par rapport à la traverse (36). L'invention propose également un procédé d'assemblage et un véhicule automobile.

## Description

L'invention se rapporte au domaine des systèmes de direction pour véhicules automobiles. L'invention traite de la fixation d'un système de direction d'un véhicule automobile. L'invention a pour objet un ensemble avec un module de crémaillère pour véhicule automobile. L'invention a également pour objet un véhicule automobile.

Un véhicule automobile comprend un train avant avec des roues directrices reliées à la structure grâce à des systèmes de suspension et un système de direction. Dans cette configuration, chaque roue directrice est liée à un support dédié qui est pivotant selon un axe vertical. Un tel support de direction est relié de manière indirecte à la structure grâce à des bras de suspension. Une telle configuration autorise une cinématique des roues directrices qui optimise le confort et la manœuvrabilité.

Un système de direction présente couramment une colonne de direction avec un module de crémaillère qui actionne des bielles de direction, qui elles atteignent les roues directrices. Afin de faciliter la fixation, il est intéressant de développer une solution ne nécessitant qu'une seule et unique vis de fixation.

Afin de circuler en agglomération, la taille des véhicules diminue de sorte à les rendre compacts. La diminution des dimensions s'accompagne d'un allège-ment. Par ricochet, cela permet de réduire le besoin en énergie primaire nécessaire pour entraîner le véhicule. En parallèle, de tels véhicules répondent à des contraintes de fiabilité et de simplification de leurs mécanismes. Cette contrainte s'applique en particulier aux systèmes de direction.

Le document EP2783942 A1 présente un boîtier d'engrenage fixé sur un châssis de carrosserie de véhicule. Un objectif est de supprimer la déformation d'un élément terminal provoquée par un contact en butée de l'élément terminal avec un côté du boîtier pendant la fixation de l'élément terminal au boîtier. Lorsqu'un boulon de borne est monté, une borne de terre tourne conjointement avec la rotation du boulon de borne. Or le positionnement du boîtier d'engrenage sur son support reste imprécis. Cette imprécision a un impact sur la précision de manœuvre de la direction, et donc sur le contrôle de trajectoire. Il existe donc un besoin d'améliorer la précision de positionnement d'une crémaillère.

L'invention a pour objectif de répondre à au moins un des problèmes ou inconvénients rencontrés dans l'art antérieur. En particulier, l'invention a pour objectif d'améliorer le maintien d'un module de crémaillère de système de direction d'un véhicule automobile. L'invention a également pour objectif d'optimiser le maintien, la précision de positionnement, la facilité d'assemblage d'un module de crémaillère de système de direction d'un véhicule automobile.

Selon un premier aspect, l'invention propose un ensemble pour véhicule automobile ; l'ensemble comprenant une structure avec une traverse ; un module de crémaillère pour système de direction de véhicule automobile, le module de crémaillère comprenant un corps de guidage avec un passage transversal, une tige dentée mobile transversalement au travers du passage transversal ; une interface d'assemblage de la traverse et du corps de guidage ; des moyens de fixation du corps de guidage à la traverse ; **remarquable en ce que** l'interface d'assemblage comprend une gorge femelle ; un rail mâle s'étendant transversalement dans la gorge femelle afin de maintenir le corps de guidage par rapport à la traverse.

L'interface matérialisée par la gorge et le rail permet un encastrement rigide. En outre, il garantit le positionnement selon plusieurs degrés de liberté. Il facilite l'opération de montage qui peut être réalisée à une main. L'invention offre un gain d'ergonomie.

Préférentiellement, la gorge femelle comprend des ailes de rétention s'étendant l'une vers l'autre et coopérant avec le rail mâle.

Préférentiellement, les ailes de rétention sont horizontales.

Préférentiellement, la gorge femelle comprend une surface de fond et une zone opposée verticalement opposée à la surface de fond ; le rail mâle comprend une portion de fond contre la surface de fond, une portion opposée plus étroite que la portion de fond.

Préférentiellement, le rail mâle comprend une plaque de positionnement dans la gorge femelle ; le module de crémaillère comprend au moins une branche de jonction reliant le corps de guidage à l'interface d'assemblage.

Préférentiellement, la plaque de positionnement s'étend transversalement de part et d'autre de la au moins une branche de jonction.

Préférentiellement, la gorge femelle comprend une butée transversale, le rail mâle étant transversalement contre ladite butée transversale.

Préférentiellement, la butée transversale s'étend longitudinalement en avant du corps de guidage.

Préférentiellement, le rail mâle et la gorge femelle comprennent des longueurs transversales égales.

Préférentiellement, la gorge femelle est formée sur la traverse, le rail mâle est formé par le module de crémaillère ; et/ou le module de crémaillère est au-dessus de la traverse.

Préférentiellement, la structure comprend des longerons ; la traverse étant soudée auxdits longerons.

Préférentiellement, l'interface d'assemblage est verticalement à distance des longerons.

Préférentiellement, le module de crémaillère comprend un pignon engrenant avec la tige dentée.

Préférentiellement, la tige dentée est crénelée.

Préférentiellement, le rail mâle et la gorge femelle sont ajustés.

Préférentiellement, les ailes de rétention font saillie horizontalement.

Préférentiellement, la plaque de positionnement s'étend transversalement de part et d'autre du corps de guidage.

Préférentiellement, les longerons sont des longerons avant.

Préférentiellement, la gorge femelle comprend des moyens de guidage.

Préférentiellement, le rail mâle comprend des moyens de guidage correspondants.

Selon un autre aspect, l'invention propose un ensemble pour véhicule automobile ; l'ensemble comprenant une traverse de structure de véhicule automobile ; un module de crémaillère pour système de direction, le module de crémaillère comprenant un corps de guidage, une tige dentée mobile au travers du corps de guidage ; des moyens de fixation du corps de guidage à la traverse ; **remarquable en** ce qu'entre le corps de guidage et la traverse, l'ensemble comprend une gorge ; un rail emboîté dans la gorge femelle afin de maintenir le corps de guidage par rapport à la traverse. Un tel ensemble offre un maintien robuste et précis du module de crémaillère sur la traverse.

Selon un autre aspect, l'invention propose un véhicule automobile comprenant un système de direction : avec un ensemble, un volant de direction ; **remarquable en ce que** l'ensemble est conforme à l'invention.

Préférentiellement, le véhicule automobile comprend une largeur externe d'au plus 1.39 m et/ou une longueur externe d'au plus 2.45 m.

Selon un autre aspect, l'invention propose un procédé d'assemblage d'un ensemble pour véhicule automobile ; l'ensemble comprenant une structure avec une traverse ; un module de crémaillère pour système de direction du véhicule automobile, le module de crémaillère comprenant un corps de guidage avec un passage transversal, une tige dentée mobile transversalement au travers du passage transversal ; une interface d'assemblage de la traverse et du corps de guidage ; des moyens de fixation du corps de guidage à la traverse ; **remarquable en ce que** l'interface d'assemblage comprend une gorge femelle ; un rail mâle s'étendant transversalement dans la gorge femelle afin de maintenir le corps de guidage par rapport à la traverse ; et en ce que le procédé d'assemblage comprend les étapes suivantes : a) fourniture ou réalisation de la structure avec la traverse ; b) coulissement transversal du corps de guidage contre la traverse en engageant le rail mâle dans la gorge femelle afin de former l'interface d'assemblage ; c) verrouillage du corps de guidage par rapport à la traverse grâce aux moyens de fixation.

Préférentiellement, l'ensemble est conforme à l'invention.

Selon un autre aspect, l'invention propose un procédé d'assemblage d'un ensemble pour véhicule automobile ; l'ensemble comprenant une structure avec une traverse ; un module de crémaillère pour système de direction du véhicule automobile ; **remarquable en ce que** l'ensemble est conforme à l'invention ; et en ce que le procédé d'assemblage comprend les étapes suivantes :
fourniture ou réalisation de la structure avec la traverse ;
fourniture ou réalisation d'un module de crémaillère comprenant un corps de guidage avec un passage transversal, une tige dentée mobile transversalement au travers du passage transversal ;
mise en correspondance du corps de guidage par rapport à la traverse afin de former une interface d'assemblage de la traverse et du corps de guidage ; l'interface d'assemblage comprenant une gorge femelle et un rail mâle ;
coulissement transversal du rail mâle dans la gorge femelle ;
verrouillage du corps de guidage par rapport à la traverse grâce à des moyens de fixation.

Préférentiellement, le véhicule automobile est conforme à l'invention.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de face d'un véhicule automobile selon l'invention.
La figure 2 montre une portion de structure avec un module de crémaillère de véhicule automobile selon l'invention.
La figure 3 représente une traverse de structure de véhicule automobile selon l'invention.
La figure 4 représente un module de crémaillère de système de direction de véhicule automobile selon l'invention.
La figure 5 est un agrandissement de la figure 4 au niveau du rail mâle du module de crémaillère.
La figure 6 représente une étape de coulissement du rail mâle dans la gorge femelle d'un ensemble pour véhicule automobile selon l'invention.
La figure 7 représente une étape de verrouillage du rail mâle dans la gorge femelle selon l'invention.
La figure 8 est un diagramme d'un procédé d'assemblage d'un ensemble avec une structure et un module de crémaillère de véhicule automobile selon l'invention.

Dans la description qui suit, le terme « comprendre » est synonyme de « inclure » et n'est pas limitatif en ce qu'il autorise la présence d'autres éléments dans le véhicule automobile ou d'autres étapes dans le procédé d'assemblage auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les égalités entre les valeurs ne sont pas à entendre au sens strict dans la mesure où chaque égalité autorise une variation d'au plus 10%, préférentiellement au plus 5%, plus préférentiellement au plus 2%, entre ces valeurs.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage de l'ensemble, à moins que le contraire ne soit mentionné explicitement.

Au travers de la description, les différentes figures utilisent les mêmes signes de référence pour désigner des entités identiques ou similaires.

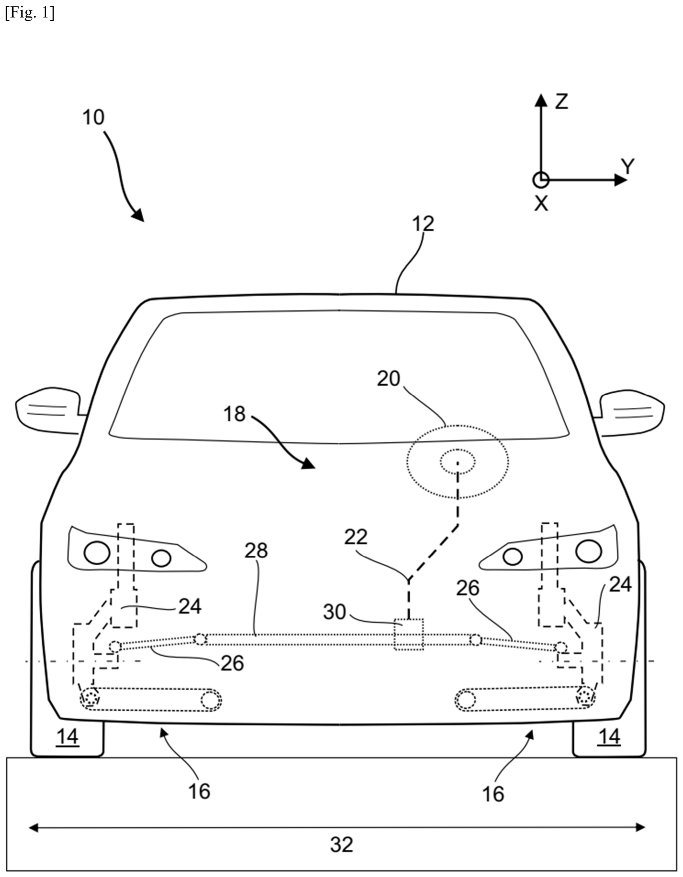

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure 12. La structure 12 forme une caisse extérieure, ou encore une ossature principale du véhicule automobile. La structure 12 délimite différents compartiments du véhicule automobile 10, dont l'habitacle passager, le coffre de chargement, le compartiment moteur (non représentés). La structure 12 comprend des profilés, tels des tubes, cintrés et soudés les uns aux autres. La structure peut comprendre des parties en matériaux plastiques.

Selon une alternative ou une option de l'invention, la structure comprend des tôles embouties et soudées les unes aux autres.

La structure 12 relie différentes parties du véhicule automobile 10 dont les ouvrants. La structure 12 forme un support de montage pour le groupe motopropulseur, les systèmes de freinage. Le véhicule automobile 10 comprend des roues directrices 14. Les roues directrices 14 pivotent sur elles-mêmes afin de diriger le véhicule automobile 10. Les roues directrices 14 sont des roues avant. Elles pivotent selon des axes de pivotement verticaux en plus de tourner sur des axes de rotation horizontaux. Les roues directrices 14 présentent des angles de braquage variables.

Le véhicule automobile 10 comprend des systèmes de suspension 16 reliant chaque roue directrice 14 à la structure 12. Les systèmes de suspension 16 sont indépendants en ce sens qu'ils autorisent des mouvements verticaux distincts pour chaque roue directrice 14.

Le véhicule automobile 10 comprend également un système de direction 18. Le système de direction 18 présente un ensemble. L'ensemble comporte une partie des entités du système de direction 18 dans son entièreté. Le système de direction 18 comprend un volant de direction 20, une colonne de direction 22. Le volant de direction 20 forme une interface de contrôle pour le conducteur. La colonne de direction 22 est entraînée en rotation via le volant de direction 20.

Chaque roue directrice 14 est montée sur un support de roue 24, tel un porte-fusée. Les supports de roue 24 sont associés aux systèmes de suspension 16. Ils sont reliés à la structure 12 par des bras de suspension. Les supports de roue 24 sont orientables grâce à des bielles de direction 26. Chaque bielle de direction 26 est associée à l'une des roues directrices 14.

Le système de direction 18 comprend encore un module de crémaillère 28. Les bielles de direction 26 sont reliées au module de crémaillère 28. Le module de crémaillère 28 lie les bielles de direction 26 l'une à l'autre. En se déplaçant latéralement, il adapte l'angle de direction de deux roues directrices 14 simultanément. Le module de crémaillère 28 comprend encore un mécanisme de conversion 30.

Selon un mode préférentiel de l'invention, le véhicule automobile 10 est un véhicule compact, également appelé véhicule urbain. Il se classe dans la catégorie « micro mobilité ». Le véhicule automobile 10 comprend une largeur externe 32 d'au plus 1.39 m et/ou une longueur externe d'au plus 2.45 m. La largeur externe 32 et la longueur externe sont des dimensions maximales. La largeur externe 32 ajoute une contrainte de compacité au système de direction 18 et à la structure 12.

Le véhicule automobile 10 présente une masse d'au plus 450 kg. Il est préférentiellement un véhicule électrique, avec une batterie électrique alimentant des moteurs électriques aptes à propulser le véhicule automobile.

Le véhicule automobile peut par exemple être un véhicule automobile particulier, par exemple un véhicule automobile à une place ou à deux places (non représentées). Les deux places sont côte à côte, ou l'une devant l'autre.

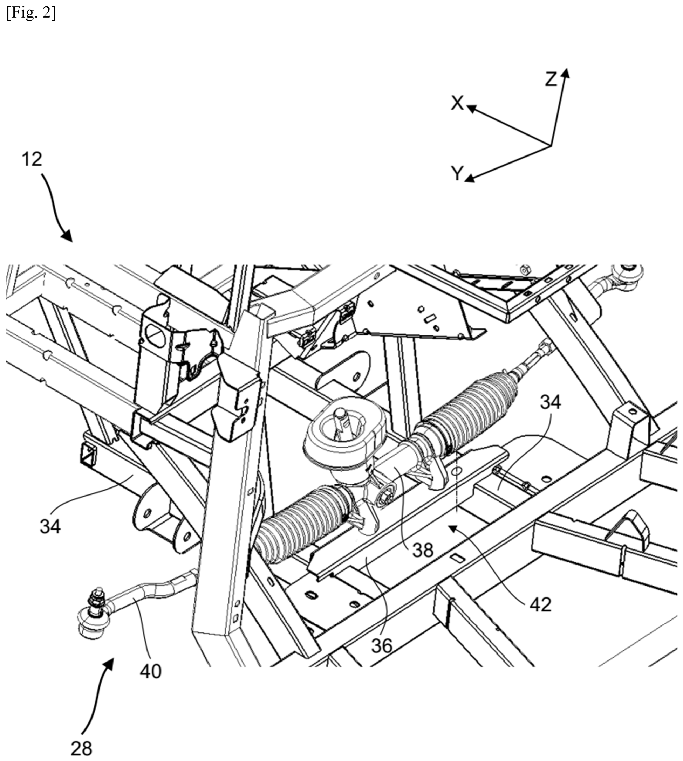

La figure 2 présente une partie de structure 12 de véhicule automobile, selon un mode de réalisation de l'invention. Le véhicule automobile peut correspondre à celui présenté en relation avec la figure 1. La structure 12 définit un habitacle pour deux places assises l'une à côté de l'autre.

La structure 12 est métallique. Elle comprend de l'acier et/ou de l'aluminium. La structure 12 présente deux longerons 34. Les longerons 34 sont des longerons avant. Ils forment le soubassement de la structure 12. Les longerons 34 sont des poutres horizontales. Ils sont formés de profilés rectangulaires.

La structure 12 comprend une traverse 36. La traverse 36 est une poutre horizontale. Elle s'étend latéralement. Elle est une traverse avant. Elle est en avant de l'habitacle passager. La traverse 36 est reliée aux longerons 34. La traverse 36 est soudée auxdits longerons 34. A ses extrémités, la traverse 36 comporte des encoches dans lesquelles sont agencés les longerons 34. Ainsi, la traverse 36 est en élévation par rapport à ces derniers.

La structure 12 supporte un module de crémaillère 28 pour système de direction du véhicule automobile. Le module de crémaillère 28 comprend un corps de guidage 38 avec un passage transversal (non représenté), une tige dentée 40 dans le passage transversal. La tige dentée 40 est mobile transversalement au travers du passage transversal. La tige dentée 40 traverse la structure 12.

Le module de crémaillère 28 est fixé à la traverse 36. Ils définissent entre eux une interface d'assemblage 42. Ils sont également fixés par des moyens de fixation. L'interface d'assemblage 42 est verticalement à distance des longerons 34.

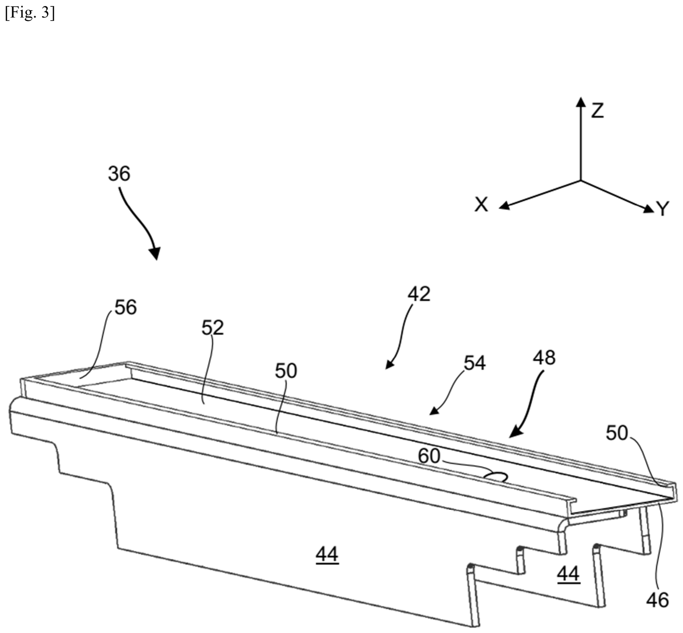

La figure 3 présente une traverse 36 de structure de véhicule automobile, selon un mode de réalisation de l'invention. Le véhicule automobile peut correspondre à celui présenté en relation avec l'une des figures 1 à 2. Le module de crémaillère n'est pas représenté par soucis de clarté.

La traverse 36 est un profilé. Elle est un profilé ouvert, par exemple vers le bas. La traverse 36 comprend deux parois verticales 44, et une paroi supérieure 46 reliant les parois verticales 44. La traverse 36 présente un profil en « U » inversé, ce qui optimise la masse et le maintien du module de crémaillère. A leurs extrémités latérales, les parois verticales 44 présentent les formes de marches afin de s'emboîter contre les longerons.

L'interface d'assemblage 42 comprend une gorge femelle 48. Dans le présent mode de réalisation, la gorge femelle 48 est associée à la traverse 36. Elle est sur sa face supérieure. Elle est délimitée par la paroi supérieure 46.

La gorge femelle 48 comprend des ailes de rétention 50. Les ailes de rétention 50 s'étendent l'une vers l'autre. Elles sont destinées à coopérer avec un rail mâle de l'interface d'assemblage 42. Les ailes de rétention 50 sont horizontales. Elles sont parallèles. Les ailes de rétention 50 forment des crochets ouverts longitudinalement afin d'assurer une rétention du rail mâle. Les ailes de rétention 50 améliorent la stabilité de maintien.

La gorge femelle 48 comprend une surface de fond 52 et une zone opposée 54 verticalement opposée à la surface de fond 52. La surface de fond 52 est formée par la paroi supérieure 46 tandis que la zone opposée 54 est marquée par les ailes de rétention 50. De manière générale, la surface de fond 52 et la zone opposée 54 sont généralement une première portion et une deuxième portion. Elles forment des strates. La gorge femelle 48 comprend des moyens de fixation 60, tel un orifice traversant la surface de fond 52.

La gorge femelle 48 comprend une butée transversale 56. La butée transversale 56 est formée par une paroi. La paroi s'étend sur toute la largeur longitudinale de la gorge femelle 48. La butée transversale 56 fait saillie par rapport à la surface de fond 52. La traverse 36 est symétrique selon un plan transversal.

Selon une alternative de l'invention, la gorge femelle comprend des ailes inclinées l'une par rapport à l'autre et coopérant avec le rail mâle ; les ailes inclinées étant inclinées l'une par rapport à l'autre de 20° et 60°.

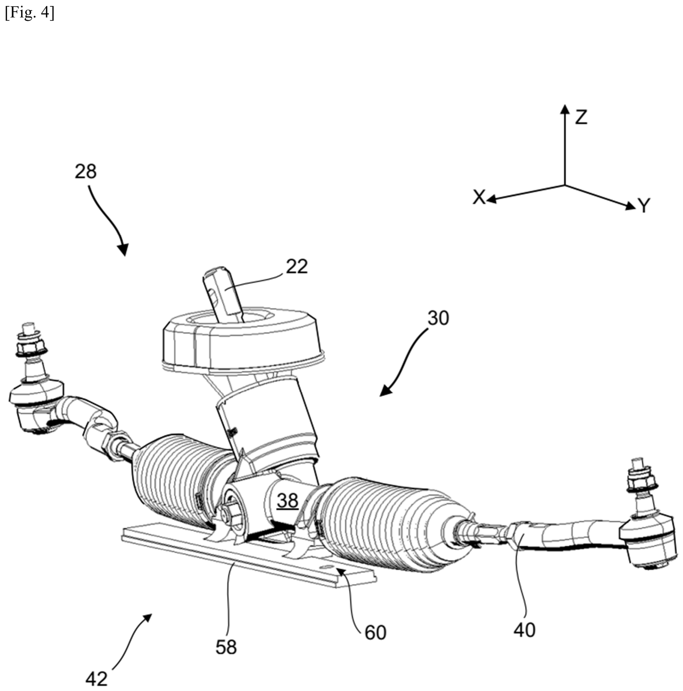

La figure 4 présente un module de crémaillère 28 de système de direction pour véhicule automobile, selon un mode de réalisation de l'invention. Le véhicule automobile peut correspondre à celui présenté en relation avec l'une des figures 1 à 3. La traverse n'est pas représentée par soucis de clarté.

Le module de crémaillère 28 comprend un mécanisme de conversion 30 du mouvement de rotation de la colonne de direction 22 (partiellement représentée) en un mouvement de translation. Le mécanisme de conversion 30 permet d'indexer la position transversale de la tige dentée 40 en fonction de la position angulaire de la colonne de direction 22. La tige dentée 40 est crénelée. Elle présente une succession de dents réparties transversalement. Le mécanisme de conversion 30 convertit un mouvement de rotation imposé par le conducteur en un mouvement de translation.

De manière générale, le module de crémaillère 28 comprend une partie mobile ; une partie fixe destinée à supporter et à guider la partie mobile. La tige dentée 40 est sensiblement coudée sur ses parties en dehors du corps de guidage 38. A ses extrémités, elle présente des liaisons tournantes ; telles des rotules ; destinées à être fixées à des bielles de direction.

Le module de crémaillère 28, notamment le mécanisme de conversion 30, comprend un pignon engrenant avec la tige dentée 40. Le pignon est dans le corps de guidage 38. Le module de crémaillère 28 présente un corps de guidage 38 dans lequel évolue la tige dentée 40 suite à l'action du pignon. A l'interface d'assemblage 42, le module de crémaillère 28 présente un rail mâle 58. Le rail mâle 58 s'étend transversalement. Il est traversé par des moyens de fixation 60. Les moyens de fixation 60 comprennent un orifice traversant le rail mâle 58.

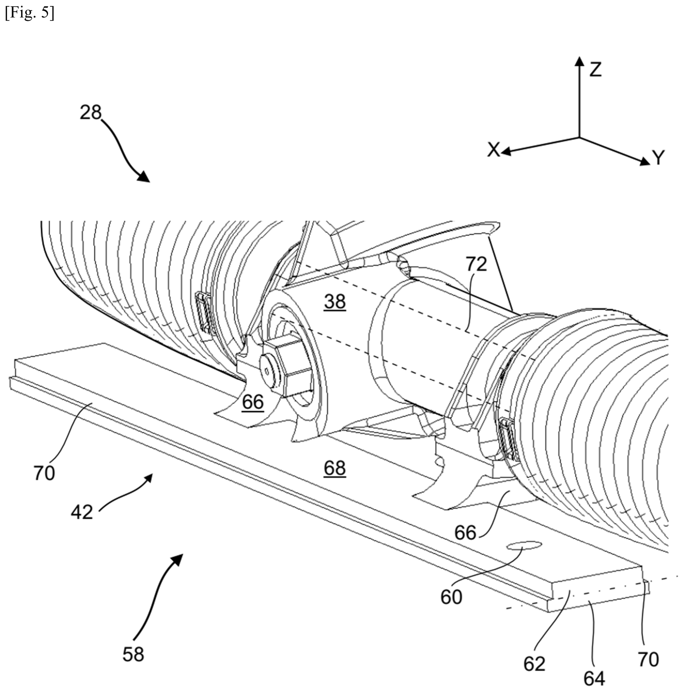

La figure 5 expose le rail mâle 58 de l'interface d'assemblage 42 du module de crémaillère pour véhicule automobile, selon un mode de réalisation de l'invention. Le véhicule automobile peut correspondre à celui présenté en relation avec l'une des figures 1 à 4.

Dans le présent mode de réalisation, le rail mâle 58 est associé au module de crémaillère 28. Le rail mâle 58 comprend une portion opposée 62, une portion de fond 64 destinée à être placée contre la surface de fond et plus large que la portion opposée 62. La portion opposée 62 et la portion de fond 64 sont superposées. La portion de fond 64 est verticalement opposée à la portion opposée 62. En raison de sa largeur supérieure, la portion de fond 64 forme un rebord horizontal faisant saillie par rapport à la portion opposée 62. La portion de fond 64 est destinée à être retenue verticalement par les ailes de rétention.

Le module de crémaillère 28 comprend au moins une branche de jonction 66, préférentiellement deux branches de jonction 66, reliant le corps de guidage 38 à l'interface d'assemblage 42. Les branches de jonction 66 sont des branches verticales. Les branches de jonction 66 s'étendent sensiblement longitudinalement.

Le rail mâle 58 est formé par une plaque de positionnement 68. La plaque de positionnement 68 est horizontale. La plaque de positionnement 68 est une embase de fixation. Ses tranches avant et arrière comprennent des rainures transversales 70. Les rainures transversales 70 peuvent être des feuillures. Les rainures transversales 70 forment par exemple des marches. Elles sont destinées à coopérer avec les ailes de rétention de la gorge femelle.

La plaque de positionnement 68 s'étend transversalement de part et d'autre de la au moins une branche de jonction 66. Ainsi, les dimensions du rail mâle 58 augmentent la stabilité. Préférentiellement, la plaque de positionnement 68 s'étend de part et d'autre du corps de guidage 38. Les branches de jonction 66 relient verticalement le corps de guidage 38 à la plaque de positionnement 68. Les moyens de fixation 60 traversent la plaque de positionnement 68.

Le corps de guidage 38 délimite le passage transversal 72 dans lequel coulisse la tige dentée. Le passage transversal 72 est généralement cylindrique. Le passage transversal 72 débouche des deux côtés du corps de guidage 38. Le corps de guidage 38 comprend un tronçon tubulaire.

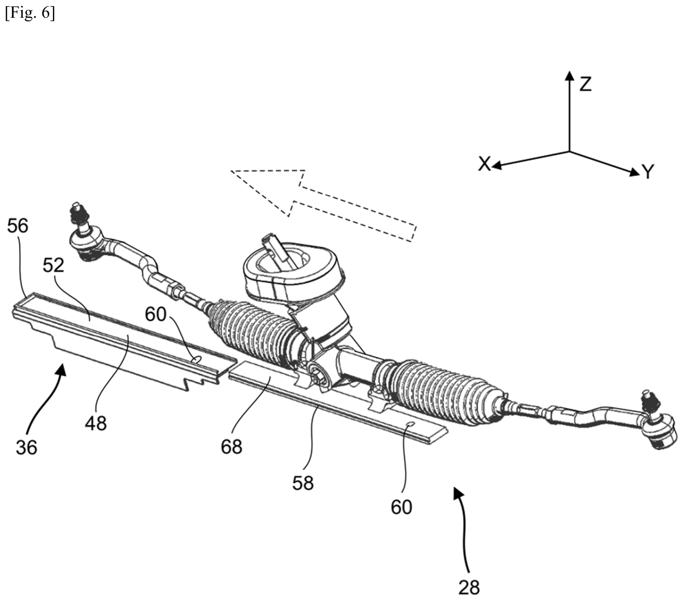

La figure 6 présente l'opération d'assemblage du module de crémaillère 28 et de la traverse 36 de véhicule automobile, selon un mode de réalisation de l'invention. Le véhicule automobile peut correspondre à celui présenté en relation avec l'une des figures 1 à 5.

Le rail mâle 58 est mis en correspondance en face de la gorge femelle 48. Il est orienté dans son alignement. Il est à l'opposé de la butée transversale 56. Le rail mâle 58 est placée verticalement au niveau de la surface de fond 52. Les moyens de fixation propres au rail mâle 58 et propres à la gorge femelle 48 sont à distance transversalement les uns des autres. Ensuite, le rail mâle 58, en l'occurrence la plaque de positionnement 68, est inséré progressivement dans la gorge femelle 48 en glissant contre la traverse 36.

La gorge femelle 48 et le rail mâle 58 forment alors une coulisse, une glissière. Un tel mécanisme présente un degré de liberté qui est supprimé ultérieurement via les moyens de fixation 60. Ce mouvement est simple à réaliser par un opérateur. La précision de positionnement longitudinale et d'orientation est obtenue dès l'entrée du rail mâle 58 dans la gorge femelle 48. La précision de positionnement transversale est atteinte grâce à la butée transversale 56.

De manière générale, la gorge femelle 48 comprend des moyens de guidage ; et le rail mâle 58 comprend des moyens de guidage correspondants. Le rail mâle 58 et la gorge femelle 48 sont des pièces profilées servant de guides, par exemple à guider un mouvement de translation. La gorge femelle 48 et le rail mâle 58 permettent un positionnement précis de la crémaillère. L'alignement est exact.

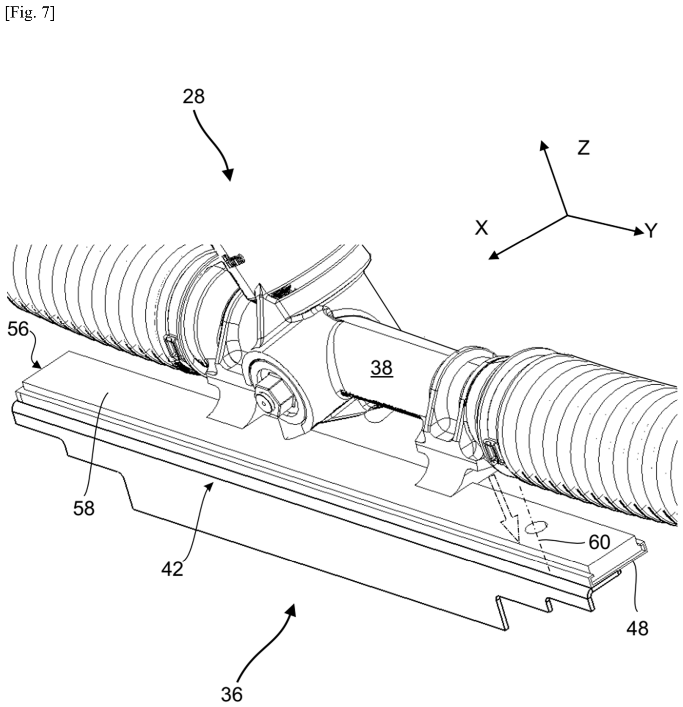

La figure 7 présente le rail mâle 58 et la gorge femelle 48 dans une configuration tels qu'assemblés dans un véhicule automobile, selon un mode de réalisation de l'invention. Le véhicule automobile peut correspondre à celui présenté en relation avec l'une des figures 1 à 6.

Le rail mâle 58 et la gorge femelle 48 comprennent des longueurs transversales égales, ou du moins sensiblement égales. Elles peuvent présenter une variation d'au plus 20%, préférentiellement d'au plus 5%. Les longueurs transversales mesurent au moins 20 cm, préférentiellement au moins 30 cm. L'interface d'assemblage 42 s'étend sur toute la largeur de la traverse 36 et du corps de guidage 38. Cette géométrie optimise la stabilité et la masse.

Le rail mâle 58 est placé en fin de course dans la gorge femelle 48. Le rail mâle 58 est transversalement contre la butée transversale 56. La butée transversale 56 s'étend longitudinalement en avant du corps de guidage 38. Le module de crémaillère 28 est au-dessus de la traverse 36.

Le rail mâle 58 comprend une portion de fond contre la surface de fond de la gorge femelle 48, puis une portion opposée. La portion de fond est plus large que la portion opposée. Elles sont ajustées transversalement aux largeurs intérieures de la gorge femelle 48. Le rail mâle 58 comprend une hauteur supérieure à la profondeur de la gorge femelle 48. Il est plus épais.

De manière générale, le rail mâle 58 et la gorge femelle 48 sont ajustés mécaniquement l'un à l'autre. Ils comprennent des profils complémentaires et/ou conjugués. Ils comprennent des profils s'épousant mutuellement. L'interface rail gorge augmente la stabilité de maintien. En outre, cette interface reprend les efforts mécaniques, ce qui déleste les moyens de fixation. Dès lors la masse et l'encombrement de ce dernier sont optimisés, tout en limitant le risque de desserrage ou de rupture.

Dans le présent mode de réalisation, la gorge femelle 48 est formée sur la traverse, le rail mâle 58 est formé par le module de crémaillère 28. Selon une alternative de l'invention, la gorge femelle est formée par le module de crémaillère ; le rail mâle est formé par la traverse.

Les moyens de fixation 60 comprennent un axe de fixation traversant des orifices de la gorge femelle 48 et du rail mâle 58. Suite à la mise en butée du rail mâle 58, les orifices de fixation coïncident. L'axe de fixation y est alors inséré. L'axe de fixation traverse une ouverture prévue dans le rail mâle 58 et se visse dans un filetage correspondant de la gorge femelle 48, éliminant ainsi les derniers degrés de liberté restants et garantissant une fixation rigide.

Selon une alternative de l'invention, les moyens de fixation comprennent des moyens d'encliquetage ; par exemple avec une languette de rétention souple.

Selon une alternative ou une option de l'invention, l'interface de fixation est segmentée. La gorge femelle est segmentée et/ou le rail mâle est segmenté.

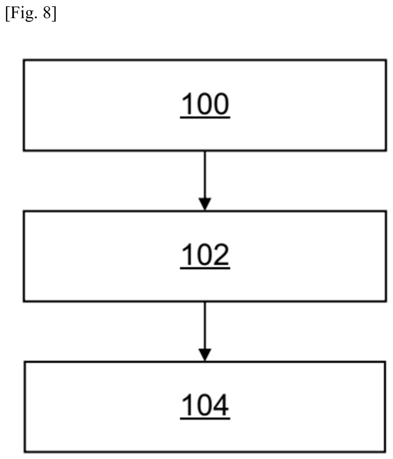

La figure 8 présente un diagramme d'un procédé d'assemblage d'un ensemble pour véhicule automobile, selon un mode de réalisation de l'invention. Le véhicule automobile peut correspondre à celui présenté en relation avec l'une des figures 1 à 7.

Le procédé d'assemblage comprend les étapes suivantes, notamment exécutées dans l'ordre qui suit :
a) fourniture ou réalisation 100 de la structure avec la traverse ;
b) coulissement 102 transversal du corps de guidage contre la traverse en engageant le rail mâle dans la gorge femelle afin de former l'interface d'assemblage ;
c) verrouillage 104 du corps de guidage par rapport à la traverse grâce aux moyens de fixation.

En d'autres termes, l'invention propose un procédé d'assemblage d'un ensemble pour véhicule automobile. L'ensemble comprend une structure avec une traverse ; un module de crémaillère pour système de direction de véhicule automobile. Le procédé d'assemblage comprend les étapes suivantes, notamment exécutées dans l'ordre qui suit :
fourniture ou réalisation de la structure avec la traverse ;
fourniture ou réalisation d'un module de crémaillère comprenant un corps de guidage avec un passage transversal, une tige dentée mobile transversalement au travers du passage transversal ;
mise en correspondance du corps de guidage par rapport à la traverse afin de former une interface d'assemblage de la traverse et du corps de guidage ; l'interface d'assemblage comprend une gorge femelle ; un rail mâle ;
coulissement transversal du rail mâle dans la gorge femelle ;
verrouillage du corps de guidage par rapport à la traverse grâce à des moyens de fixation. L'assemblage est rapide et précis. L'interface est rigide.

L'invention comprend la combinaison de tous les modes de réalisation illustrés par toutes les figures.

Les figures 2 à 7 sont des vues isométriques. Elles respectent chacune une échelle spécifique, des angles réels et des proportions réelles.

## Revendications

1. Ensemble pour véhicule automobile (10) ; l'ensemble comprenant une structure (12) avec une traverse (36) ; un module de crémaillère (28) pour système de direction (18) de véhicule automobile (10), le module de crémaillère (28) comprenant un corps de guidage (38) avec un passage transversal (72), une tige dentée (40) mobile transversalement au travers du passage transversal (72) ; une interface d'assemblage (42) de la traverse (36) et du corps de guidage (38) ; des moyens de fixation (60) du corps de guidage (38) à la traverse (36) ; **caractérisé en ce que** l'interface d'assemblage (42) comprend une gorge femelle (48) ; un rail mâle (58) s'étendant transversalement dans la gorge femelle (48) afin de maintenir le corps de guidage (38) par rapport à la traverse (36).

2. Ensemble selon la revendication 1, **caractérisé en ce que** la gorge femelle (48) comprend des ailes de rétention (50) s'étendant l'une vers l'autre et coopérant avec le rail mâle (58) ; préférentiellement, les ailes de rétention (50) sont horizontales.

3. Ensemble selon l'une des revendications 1 à 2, **caractérisé en ce que** la gorge femelle (48) comprend une surface de fond (52) et une zone opposée (54) verticalement opposée à la surface de fond (52) ; le rail mâle (58) comprend une portion de fond (64) contre la surface de fond (52), une portion opposée (62) plus étroite que la portion de fond (64).

4. Ensemble selon l'une des revendications 1 à 3, **caractérisé en ce que** le rail mâle (58) comprend une plaque de positionnement (68) dans la gorge femelle (48) ; le module de crémaillère (28) comprend au moins une branche de jonction (66) reliant le corps de guidage (38) à l'interface d'assemblage (42) ; préférentiellement, la plaque de positionnement (68) s'étend transversalement de part et d'autre de la au moins une branche de jonction (66).

5. Ensemble selon l'une des revendications 1 à 4, **caractérisé en ce que** la gorge femelle (48) comprend une butée transversale (56), le rail mâle (58) étant transversalement contre ladite butée transversale (56) ; préférentiellement, la butée transversale (56) s'étend longitudinalement en avant du corps de guidage (38).

6. Ensemble selon l'une des revendications 1 à 5, **caractérisé en ce que** le rail mâle (58) et la gorge femelle (48) comprennent des longueurs transversales égales.

7. Ensemble selon l'une des revendications 1 à 6, **caractérisé en ce que** la gorge femelle (48) est formée sur la traverse (36), le rail mâle (58) est formé par le module de crémaillère (28) ; et/ou le module de crémaillère (28) est au-dessus de la traverse (36).

8. Ensemble selon l'une des revendications 1 à 7, **caractérisé en ce que** la structure (12) comprend des longerons (34) ; la traverse (36) étant soudée auxdits longerons (34) ; préférentiellement, l'interface d'assemblage (42) est verticalement à distance des longerons (34).

9. Véhicule automobile (10) comprenant un système de direction (18) :
avec un ensemble, un volant de direction (20) ; **caractérisé en ce que** l'ensemble est conforme à l'une des revendication 1 à 8 ;
préférentiellement, le véhicule automobile (10) comprend une largeur externe (32) d'au plus 1.39 m et/ou une longueur externe d'au plus 2.45 m.

10. Procédé d'assemblage d'un ensemble pour véhicule automobile (10) ; l'ensemble comprenant une structure (12) avec une traverse (36) ; un module de crémaillère (28) pour système de direction (18) du véhicule automobile (10), le module de crémaillère (28) comprenant un corps de guidage (38) avec un passage transversal (72), une tige dentée (40) mobile transversalement au travers du passage transversal (72) ; une interface d'assemblage (42) de la traverse (36) et du corps de guidage (38) ; des moyens de fixation (60) du corps de guidage (38) à la traverse (36) ; **caractérisé en ce que** l'interface d'assemblage (42) comprend une gorge femelle (48) ; un rail mâle (58) s'étendant transversalement dans la gorge femelle (48) afin de maintenir le corps de guidage (38) par rapport à la traverse (36) ; et **en ce que** le procédé d'assemblage comprend les étapes suivantes :
• a) fourniture ou réalisation (100) de la structure (12) avec la traverse (36) ;
• b) coulissement (102) transversal du corps de guidage (38) contre la traverse (36) en engageant le rail mâle (58) dans la gorge femelle (48) afin de former l'interface d'assemblage (42) ;
• c) verrouillage (104) du corps de guidage (38) par rapport à la traverse (36) grâce aux moyens de fixation (60) ; préférentiellement, l'ensemble est conforme à l'une des revendications 1 à 8.
